(19) Europäisches Patentamt
European Patent Office
Office européen des brevets

(11) EP 1 095 097 B1

(12) **EUROPÄISCHE PATENTSCHRIFT**

(45) Veröffentlichungstag und Bekanntmachung des Hinweises auf die Patenterteilung:
**13.07.2005 Patentblatt 2005/28**

(21) Anmeldenummer: **99929191.7**

(22) Anmeldetag: **12.06.1999**

(51) Int Cl.⁷: **C08K 5/5399**, C08L 69/00

(86) Internationale Anmeldenummer:
**PCT/EP1999/004060**

(87) Internationale Veröffentlichungsnummer:
**WO 2000/000542 (06.01.2000 Gazette 2000/01)**

(54) **FLAMMWIDRIGE POLYCARBONAT-ABS-FORMMASSEN**

FLAME RESISTANT POLYCARBONATE/ABS PLASTIC MOLDING MATERIALS

MATIERES MOULEES EN POLYCARBONATE/PLASTIQUE ABS ININFLAMMABLES

(84) Benannte Vertragsstaaten:
**BE CH DE DK ES FI FR GB IT LI NL**

(30) Priorität: **26.06.1998 DE 19828541**

(43) Veröffentlichungstag der Anmeldung:
**02.05.2001 Patentblatt 2001/18**

(73) Patentinhaber: **Bayer MaterialScience AG**
**51368 Leverkusen (DE)**

(72) Erfinder:
- **ECKEL, Thomas**
  **D-41540 Dormagen (DE)**
- **ZOBEL, Michael**
  **D-40457 Düsseldorf (DE)**
- **WITTMANN, Dieter**
  **D-51375 Leverkusen (DE)**

(56) Entgegenhaltungen:
**EP-A- 0 417 839**
**EP-A- 0 728 811**
**WO-A-97/40092**
**WO-A-99/19383**
**DE-A- 2 755 384**

- **CHEMICAL ABSTRACTS, vol. 120, no. 12, 21. März 1994 (1994-03-21) Columbus, Ohio, US; abstract no. 136041, ANTONOV ET AL.: "Study of the mechanism of fire retardant action in high-impact ABS-POLYCARBONATE blend" XP002116532 & VYSOKOMOL. SOEDIN., SER. A , Bd. 35, Nr. 9, 1993, Seiten 1442-1448, ISSN: 0507-5475**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft mit Phosphazenen ausgerüstete Polycarbonat-ABS-Formmassen, die einen ausgezeichneten Flammschutz und sehr gute Verarbeitungseigenschaften aufweisen, wobei das Pfropfpolymerisat mittels Masse-, Lösungs- oder Masse-Suspensions-Polymerisationsverfahren hergestellt wird.

In DE-A 196 16 968 werden polymerisierbare Phosphazenderivate, Verfahren zu deren Herstellung und deren Verwendung als aushärtbare Bindemittel für Lacke, Beschichtungen, Füllmittel, Spachtelmassen, Klebstoffe, Formteile oder Folien beschrieben.

In WO 97/400 92 werden flammgeschutzte Formmassen aus thermoplastischen Polymeren und unsubstituierten Phosphazenen (Typ $PN_{n-x}$ $H_{1-y}$) beschrieben.

EP-A 728 811 beschreibt eine thermoplastische Mischung bestehend aus aromatischem Polycarbonat, Pfropfcopolymer, Copolymer und Phosphazenen, welche gute Flammschutzeigenschaften, Schlagzähigkeit und Wärmeformbeständigkeit aufweisen.

Aufgabe der vorliegenden Erfindung ist die Bereitstellung von Polycarbonat/ABS-Formmassen mit einer ausgezeichneten Flammfestigkeit und ausgezeichneten Verarbeitungseigenschaften wie gutem Fließverhalten und reduzierter Werkzeugbelagsbildung während des Verarbeitungsprozesses. Dieses Eigenschaftsspektrum wird besonders bei Anwendungen im Bereich Datentechnik wie etwa für Gehäuse von Monitoren, Druckern, Printern, Kopierern usw. gefordert.

Es wurde nun gefunden, daß PC/ABS-Formmassen, die Phosphazene in Kombination mit mittels Masse-, Lösungs- oder Massse-Suspensions-Polymerisationsverfahren hergestelltem Pfropfpolymerisat auf Basis eines Dienkautschuks die gewünschten Eigenschaften aufweisen.

Gegenstand der Erfindung sind daher thermoplastische Formmassen enthaltend

A) 40 bis 99, vorzugsweise 60 bis 98,5 Gew.-Teile aromatisches Polycarbonat und/oder Polyestercarbonat

B) 0,5 bis 60, vorzugsweise 1 bis 40, insbesondere 2 bis 25 Gew.-Teile mittels Masse-, Lösungs- oder Masse-Suspensions-Polymerisationsverfahren hergestelltes Pfropfpolymerisat von

B.1) 50 bis 99, vorzugsweise 65 bis 98 Gew.-% eines oder mehrerer Vinylmonomeren auf

B.2) 13 bis 2 Gew.-% einer oder mehrerer Pfropfgrundlagen mit einer Glasumwandlungstemperatur <10°C, vorzugsweise <0°C, besonders bevorzugt < -10°C,

C) 0 bis 45, vorzugsweise 0 bis 30, besonders bevorzugt 2 bis 25 Gew.-Teile mindestens eines thermoplastischen Polymers, ausgewählt aus der Gruppe der Vinyl(co)polymerisate und Polyalkylenterephthalate,

D) 0,1 bis 50, vorzugsweise 2 bis 35, insbesondere 5 bis 25 Gew.-Teile mindestens einer Komponente, ausgewählt aus der Gruppe der Phosphazene der Formeln

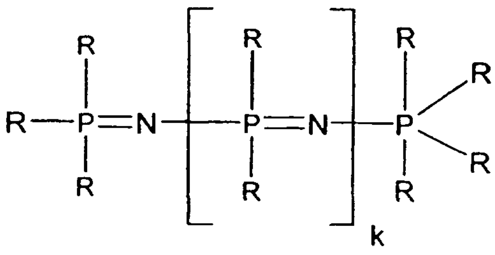

(Ia),

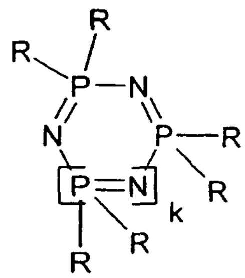

(Ib),

worin

R jeweils gleich oder verschieden ist und für Amino, jeweils gegebenenfalls halogeniertes, vorzugsweise mit Fluor halogeniertes $C_1$- bis $C_6$-Alkyl oder $C_1$-$C_8$-Alkoxy, jeweils gegebenenfalls durch Alkyl, vorzugsweise $C_1$-$C_4$-Alkyl, und/oder Halogen, vorzugsweise Chlor, Brom, substituiertes $C_5$- bis $C_6$-Cycloalkyl, $C_6$- bis $C_{20}$-Aryl, vorzugsweise Phenyl oder Naphthyl, $C_6$- bis $C_{20}$-Aryloxy, vorzugsweise Phenoxy, Naphthyloxy, oder $C_7$-$C_{12}$-Aralkyl, vorzugsweise Phenyl-$C_1$-$C_4$-alkyl, steht,

k für 0 oder eine Zahl von 1 bis 15, vorzugsweise für eine Zahl von 1 bis 10 steht,

E) 0 bis 5, vorzugsweise 0,1 bis 1, besonders bevorzugt 0,1 bis 0,5 Gew.-Teile fluoriertes Polyolefin.

**Komponente A**

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-OS 2 232 877, DE-OS 2 703 376, DE-OS 2 714 544, DE-OS 3 000 610, DE-OS 3 832 396; zur Herstellung aromatischer Polyestercarbonate z B. DE-OS 3 077 934).

Die Herstellung aromatischer Polycarbonate erfolgt z. B durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als tnfunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (III)

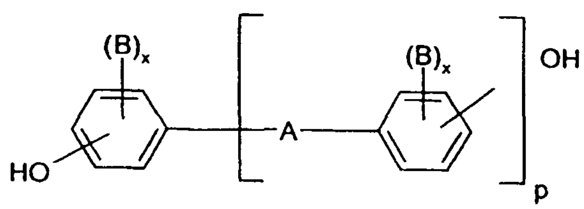

(III),

wobei

A eine Einfachbindung, $C_1$-$C_5$-Alkylen, $C_2$-$C_5$-Alkyliden, $C_5$-$C_6$-Cycloalkyliden, -O-, -SO-, -CO-, -S-, $-SO_2-$, $C_6$-$C_{12}$-Arylen, an das weitere aromatische gegebenenfalls Heteroatome enthaltende Ringe kondensiert sein können, oder ein Rest der Formel (IV) oder (V)

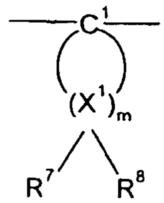

(IV)

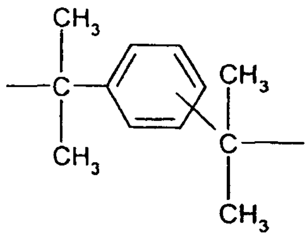

(V)

B jeweils $C_1$-$C_{12}$-Alkyl, vorzugsweise Methyl, Halogen, vorzugsweise Chlor und/oder Brom

x jeweils unabhängig voneinander 0, 1 oder 2,

p 1 oder 0 sind, und

$R^7$ und $R^8$ für jedes $X^1$ individuell wählbar, unabhängig voneinander Wasserstoff oder $C_1$-$C_6$-Alkyl, vorzugsweise Wasserstoff, Methyl oder Ethyl,

$X^1$ Kohlenstoff und

m eine ganze Zahl von 4 bis 7, bevorzugt 4 oder 5 bedeuten, mit der Maßgabe, daß an mindestens einen Atom $X^1$, $R^7$ und $R^8$ gleichzeitig Alkyl sind.

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kembromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenyl-sulfon sowie deren di- und tetrabromierten oder chlorierten Derviate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate sind geeignete Kettenabbrecher beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten, wie 3,5-di-tert. -Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-%, und 10 Mol-%, bezogen auf die Molsumme der jeweils eingesetzten Diphenole.

Die thermoplastischen, aromatischen Polycarbonate haben mittlere Gewichtsmittelmolekulargewichte ($M_w$, gemessen z. B durch Ultrazentrifuge oder Streulichtmessung) von 10 000 bis 200 000, vorzugsweise 20 000 bis 80 000.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an dreifunktionellen oder mehr als dreifunktionellen Verbindungen, beispielsweise solchen mit drei und mehr phenolischen

Gruppen.

Geeignet sind sowohl Homopolycarbonate als auch Copolycarbonate. Zur Herstellung erfindungsgemäßer Copolycarbonate gemäß Komponente A können auch 1 bis 25 Gew.-%, vorzugsweise 2,5 bis 25 Gew.-% (bezogen auf die Gesamtmenge an einzusetzenden Diphenolen) Polydiorganosiloxane mit Hydroxy-aryloxy-Endgruppen eingesetzt werden. Diese sind bekannt (s. beispielsweise US-Patent 3 419 634) bzw. nach literaturbekannten Verfahren herstellbar. Die Herstellung Polydiorganosiloxanhaltiger Copolycarbonate wird z. B. in DE-OS 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt bzw. besonders bevorzugt genannten Diphenole, insbesondere 2,2-Bis(3,5-dibrom-4-hydroxyphenyl)-propan.

Aromatische Dicarbonsäuredihalogenide zur Herstellung von aromatischen Polyestercarbonate sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1 20 und 20:1.

Bei der Herstellung von Polyestercarbonaten wird zusätzlich ein Kohlensäurehalogenid, vorzugsweise Phosgen als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$-$C_{22}$-Alkylgruppen oder durch Halogenatome substituiert sein können, sowie aliphatische $C_2$-$C_{22}$-Monocarbonsäurechloride in Betracht.

Die Menge an Kettenabbrechern beträgt jeweils 0,1 bis 10 Mol-%, bezogen im Falle der phenolischen Kettenabbrecher auf Mole Diphenole und Falle von Monocarbonsäurechlorid-Kettenabbrecher auf Mole Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu ebenfalls DE-OS 2 940 024 und DE-OS 3 007 934).

Als Verzweigungsmittel können beispielsweise 3- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 1,0 Mol% (bezogen auf eingesetzte Dicarbonsäuredichloride) oder 3- oder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3.5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methylphenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol-% bezogen auf eingesetzte Diphenole verwendet werden. Phenolische Verzweigungsmittel können mit den Diphenolen vorgelegt. Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppcn und Carbonatgruppen. Sowohl der Ester- als auch der Carbonatanteil der aromatischen Polyestercarbonate kann in Form von Blocken oder statistisch verteilt im Polykondensat vorliegen.

Die relative Lösungsviskosität ($\eta_{rel}$) der aromatischen Polycarbonate und Polyestercarbonate liegt im Bereich 1,18 bis 1,4, vorzugsweise 1,22 bis 1,3 (gemessen an Lösungen von 0,5 g Polycarbonat oder Polyestercarbonat in 100 ml Methylcnchlorid-Lösung bei 25°C).

Die thermoplastischen, aromatischen Polycarbonate und Polyestercarbonate können allem oder im beliebigen Gemisch untereinander eingesetzt werden

**Komponente B**

Das kautschukmodifizierte Pfropfpolymerisat B umfaßt ein statistisches (Co)polymerisat aus Monomeren gemäß B.1.1 und B.1.2, sowie einem mit dem statistischen (Co)polymerisat aus B.1.1 und B.1.2 gepfropften Kautschuk B.2, wobei die Herstellung von B in bekannter Weise nach einem Masse- oder Lösungs- oder Masse-Suspensions-Polymerisationsverfahren erfolgt, wie z.B. in den US 3 243 481, US 3 509 237, US 3 660 535, 4 221 833 und US 4 239 863 beschrieben.

Beispiele für Monomere B.1.1 sind Styrol, $\alpha$-Methylstyrol, halogen- oder alkylkernsubstituierte Styrole wie p-Methylstyrol, p-Chlorstyrol, (Meth)acrylsäure-$C_1$-$C_8$-alkylester wie Methylmethacrylat, n-Butylacrylat und t-Butylacrylat. Beispiele für Monomere B.1.2 sind ungesattigte Nitrile wie Acrylnitril, Methacrylnitril, (Meth)Acrylsäure-$C_1$-$C_8$-al-

kylester wie Methylmethacrylat, n-Butylacrylat, t-Butylacrylat, Derivate (wie Anhydride und Imide) ungesättigter Carbonsäuren wie Maleinsaureanhydrid und N-Phenyl-maleinimid oder Mischungen davon.

Bevorzugte Monomere B.1.1 sind Styrol, α-Methylstyrol und/oder Methylmethacrylat, bevorzugte Monomere B.1.2 sind Acrylnitril, Maleinsaureanhydrid und/oder Methylmethacrylat.

Besonders bevorzugte Monomere sind B.1.1 Styrol und B.1.2 Acrylnitril.

Für die kautschukmodifizierten Pfropfpolymerisate B geeignete Kautschuke B.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren-und Ethylen/Vinylacetat-Kautschuke.

Bevorzugte Kautschuke B.2 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß B.1.1 und B.1.2), mit der Maßgabe, daß die Glasübergangstemperatur der Komponente B. 2 unterhalb 10°C, vorzugsweise unterhalb -10°C liegt. Besonders bevorzugt wird reiner Polybutadienkautschuk.

Die Komponente B kann, falls erforderlich und wenn dadurch die Kautschukeigenschaften der Komponente B.2 nicht beeinträchtigt werden, zusätzlich noch geringe Mengen, üblicherweise weniger als 5 Gew.-%, vorzugsweise weniger als 2 Gew.-%, bezogen auf B.2, vernetzend wirkender ethylenisch ungesattigter Monomeren enthalten. Beispiele für solche vemetzend wirkenden Monomere sind Alkylendiol-di-(meth)-acrylate, Polyester-di-(meth)-acrylate, Divinylbenzol, Trivinylbenzol, Triallylcyanurat, Allyl-(meth)-acrylat, Diallylmaleat und Diallylfumarat.

Das kautschukmodifizierte Pfropfpolymerisat B wird erhalten durch Pfropfpolymerisation von 50 bis 99, bevorzugt 65 bis 98, besonders bevorzugt 75 bis 97 Gew.-Teilen eines Gemischs aus 50 bis 99, bevorzugt 60 bis 95 Gew.-Teilen Monomeren gemäß B.1.1 und 1 bis 50, bevorzugt 5 bis 40 Gew.-Teilen Monomeren gemäß B.1.2 in Gegenwart von 2 bis 13 Gew.-Teilen der Kautschukkomponente B.2, wobei die Pfropfpolymerisation nach einem Masse- oder Lösungs- oder Masse-Suspensions-Polymerisationsverfahren durchgeführt wird.

Wesentlich bei der Herstellung der kautschukmodifizierten Pfropfpolymerisate B ist, daß die Kautschukkomponente B.2 vor der Pfropfpolymerisation im Gemisch der Monomeren B.1.1 und B.1.2 in gelöster Form vorliegt. Die Kautschukkomponente B.2 darf also weder so stark vernetzt sein, daß eine Lösung in B.1.1 und B.1.2 unmöglich wird, noch darf B.2 zu Beginn der Pfropfpolymerisation bereits in Form diskreter Teilchen vorliegen. Die für die Produkteigenschaften von B wichtige Teilchenmorphologie und zunehmende Vernetzung von B.2 bildet sich erst im Verlauf der Pfropfpolymerisation aus (siehe hierzu beispielsweise Ullmann, Encyclopädie der technischen Chemie, Band 19, S. 284 ff., 4. Auflage 1980).

Das statistische Copolymerisat aus B.1.1 und B.1.2 liegt üblicherweise im Polymerisat B zu einem Teil auf dem Kautschuk B.2 auf- oder eingepfropft vor, wobei dieses Pfropfmischpolymerisat diskrete Teilchen im Polymerisat B ausbildet. Der Anteil des auf- oder eingepfropften Copolymerisats aus B.1.1 und B.1.2 am gesamten Copolymerisat aus B.1.1 und B.1.2 - also die Pfropfausbeute (= Gewichtsverhältnis der tatsächlich gepfropften Pfropfmonomeren zu den insgesamt verwendeten Pfropfmonomeren x 100, angegeben in %) - sollte dabei 2 bis 40 %, vorzugsweise 3 bis 30 %, besonders bevorzugt 4 bis 20 % betragen.

Der mittlere Teilchendurchmesser der resultierenden gepfropften Kautschukteilchen (ermittelt durch Auszählung an elektronenmikroskopischen Aufnahmen) liegt im Bereich von 0,5 bis 5 µm, vorzugsweise von 0,8 bis 2,5 µm.

**<u>Komponente C</u>**

Die Komponente C umfaßt ein oder mehrere thermoplastische Vinyl (co)polymerisate C.1 und/oder Polyalkylenterephthalate C.2.

Geeignet sind als Vinyl(co)Polymerisate C.1 Polymerisate von mindestens einem Monomeren aus der Gruppe der Vinylaromaten, Vinylcyanide (ungesättigte Nitrile), (Meth)Acrylsäure-($C_1$-$C_8$)-Alkylester, ungesättigte Carbonsäuren sowie Derivate (wie Anhydride und Imide) ungesättigter Carbonsäuren. Insbesondere geeignet sind (Co)Polymerisate aus

C.1.1 50 bis 99, vorzugsweise 60 bis 80 Gew.-Teilen Vinylaromaten und/oder kernsubstituierten Vinylaromaten wie beispielsweise Styrol, α-Methylstyrol, p-Methylstyrol, p-Chlorstyrol) und/oder Methacrylsäure-($C_1$-$C_8$)-Alkylester wie z.B. Methylmethacrylat, Ethylmethacrylat), und

C.1.2 1 bis 50, vorzugsweise 20 bis 40 Gew.-Teilen Vinylcyanide (ungesättigte Nitrile) wie Acrylnitril und Methacrylnitril und/oder (Meth)Acrylsäure-(C,-$C_8$)-Alkylester (wie z.B. Methylmethacrylat, n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl-Maleinimid).

Die (Co)Polymerisate C.1 sind harzartig, thermoplastisch und kautschukfrei.

Besonders bevorzugt ist das Copolymerisat aus C.1.1 Styrol und C.1.2 Acrylnitril.

Die (Co)Polymerisate gemäß C.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise Molekulargewichte $\overline{M}_w$ (Gewichtsmittel, ermittelt durch Lichtstreuung oder Sedimentation) zwischen 15 000 und 200 000.

Die Polyalkylenterephthalate der Komponente C.2 sind Reaktionsprodukte aus aromatischen Dicarbonsäuren oder ihren reaktionsfähigen Derivaten, wie Dimethylestem oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Mol-%, bezogen auf die Diolkomponente Ethylenglykol- und/oder Butandiol-1,4-Reste.

Die bevorzugten Polyalkylenterephthalate können neben Terephthalsäureresten bis zu 20 Mol-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexan-diessigsäure.

Die bevorzugten Polyalkylenterephthalate können neben Ethylenglykol- bzw. Butandiol-1,4-Resten bis zu 20 Mol-%, vorzugsweise bis zu 10 Mol-%, andere aliphatische Diole mit 3 bis 12 C-Atomen oder cycloalipahtische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxyphenyl)-propan und 2,2-Bis-(4-hydroxypropoxyphenyl)-propan (DE-OS 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-OS 1 900 270 und US-PS 3 692 744, verzweigt werden. Beispiele bevorzugter Verzweigungsmittel sind Trimesinsaure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

<u>**Komponente D**</u>

Phosphazene gemäß Komponente D, welche gemäß der vorliegenden Erfindung eingesetzt werden, sind lineare Phosphazene gemäß Formel (Ia) oder cyclische Phosphazene gemäß Formel (Ib)

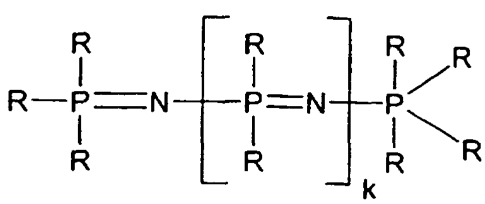

(Ia),

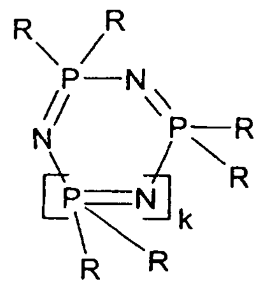

(Ib),

wobei
R und k die oben angegebene Bedeutung haben.

Beispielhaft seien genannt:

Propoxyphosphazen, Phenoxyphosphazen, Methylphenoxyphosphazen, Aminophosphazen und Fluoralkylphosphazene.
Bevorzugt ist Phenoxyphosphazen.
Die Phosphazene können allein oder als Mischung eingesetzt werden. Der Rest R kann immer gleich sein oder 2 oder mehr Reste in den Formeln (Ia) und (Ib) können verschieden sein.
Die Phosphazene und deren Herstellung sind beispielsweise in EP-A 728 811, DE-A 1 961668 und WO 97/40092 beschrieben.

**Komponente E**

Die fluorierten Polyolefine E sind hochmolekular und besitzen Glasübergangstemperaturen von über -30°C, in der Regel von über 100°C, Fluorgehalte, vorzugsweise von 65 bis 76, insbesondere von 70 bis 76 Gew.-%, mittlere Teilchendurchmesser $d_{50}$ von 0,05 bis 1 000, vorzugsweise 0,08 bis 20 µm. Im allgemeinen haben die fluorierten Polyolefine E eine Dichte von 1,2 bis 2,3 g/cm$^3$. Bevorzugte fluorierte Polyolefine E sind Polytetrafluorethylen, Polyvinylidenfluorid, Tetrafluorethylen(Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1962, Seite 484-494; "Fluorpolymers" von Wall, Wiley-Interscience, John Wiley & Sons, Inc., New York, Band 13, 1970, Seite 623-654, "Modern Plastics Encyclopedia", 1970-1971, Band 47, Nr. 10 A, Oktober 1970, Mc Graw-Hill, Inc., New York, Seite 134 und 774; "Modern Plastica Encyclopedia", 1975-1976, Oktober 1975, Band 52, Nr. 10 A, Mc Graw-Hill, Inc., New York, Seite 27, 28 und 472 und US-PS 3 671 487, 3 723 373 und 3 838 092).
Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxidisulfat bei Drucken von 7 bis 71 kg/cm$^2$ und bei Temperaturen von 0 bis 200°C, vorzugsweise bei Temperaturen von 20 bis 100°C. (Nähere Einzelheiten s. z. B. US-Patent 2 393 967). Je nach Einsatzform kann die Dichte dieser Materialien zwischen 1,2 und 2,3 g/cm$^3$, die mittlere Teilchengröße zwischen 0,5 und 1 000 µm liegen.
Erfindungsgemäß bevorzugte fluorierte Polyolefine E sind Teträfluorethylenpolymerisate mit mittleren Teilchendurchmesser von 0,05 bis 20 µm, vorzugsweise 0,08 bis 10 µm, und eine Dichte von 1,2 bis 1,9 g/cm$^3$ und werden vorzugsweise in Form einer koagulierten Mischung von Emulsionen der Tetrafluorethylenpolymerisate E mit Emulsionen eines Pfropfpolymerisats eingesetzt.
Geeignete, in Pulverform einsetzbare fluorierte Polyolefine E sind Tetrafluorethylenpolymerisate mit mittleren Teilchendurchmesser von 100 bis 1 000 µm und Dichten von 2,0 g/cm$^3$ bis 2,3 g/cm$^3$.
Zur Herstellung einer koagulierten Mischung aus einem Pfropfpolymerisat B und Komponente E wird zuerst eine wäßrige Emulsion (Latex) eines Pfropfpolymerisates mit einer feinteiligen Emulsion eines Tetrafluorethylenpolymerisates E vermischt; geeignete Tetrafluorethylenpolymerisat-Emulsionen besitzen üblicherweise Feststoffgehalte von 30 bis 70 Gew.-%, insbesondere von 50 bis 60 Gew.-%, vorzugsweise von 30 bis 35 Gew.-%.
In der Emulsionsmischung liegt das Gleichgewichtsverhältnis Pfropfpolymerisat zum Tetrafluorethylenpolymerisat E bei 95:5 bis 60:40. Anschließend wird die Emulsionsmischung in bekannter Wiese koaguliert, beispielsweise durch Sprühtrocknen, Gefriertrocknung oder Koagulation mittels Zusatz von anorganischen oder organischen Salzen, Säuren, Basen oder organischen, mit Wasser mischbaren Lösemitteln, wie Alkoholen, Ketonen, vorzugsweise bei Temperaturen von 20 bis 150°C, insbesondere von 50 bis 100°C. Falls erforderlich, kann bei 50 bis 200°C, bevorzugt

70 bis 100°C, getrocknet werden.

Geeignete Tetrafluorethylenpolymerisat-Emulsionen sind handlsübliche Produkte und werden beispielsweise von der Firma DuPont als Teflon® 30 N angeboten.

Die erfindungsgemäßen Formmassen können weingstens eines der üblichen Additive, wie Gleit- und Entformungsmittel, Nukleiermittel, Antistatika, Stabilisatoren sowie Farbstoffe und Pigmente enthalten.

Die erfindungsgemäßen Formmassen können bis zu 35 Gew -%, bezogen auf die Gesamt-Formmasse, eines weiteren, gegebenenfalls synergistisch wirkenden Flammschutzmittels enthalten. Beispielhaft werden als weitere Flammschutzmittel organische Halogenverbindungen wie Decabrombisphenylether, Tetrabrombisphenol, anorganische Halogenverbindungen wie Ammoniumbromid, Stickstoffverbindungen, wie Melamin, Melaminformaldehyd-Harze, anorganische Hydroxidverbindungen wie Mg-, Al-Hydroxid, anorganische Verbindungen wie Antimonoxide, Banummetaborat, Hydroxoantimonat, Zirkonoxid, Zirkonhydroxid, Molybdenoxid, Ammoniummolybdat, Zinkborat, Ammoniumborat, Bariummetaborat, Talk, Silikat, Siliziumoxid und Zinnoxid sowie Siloxanverbindungen genannt.

Die erfindungsgemäßen Formmassen enthaltend die Komponenten A bis E und gegebenenfalls weiteren bekannten Zusätzen wie Stabilisatoren, Farbstoffen, Pigmenten, Gleit- und Entformungsmitteln, Nukleiermittel sowie Antistatika, werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert und schmelzextrudiert, wobei die Komponente E vorzugsweise in Form der bereits erwähnten koagulierten Mischung eingesetzt wird.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Gegenstand der vorliegenden Erfindung ist daher auch ein Verfahren zur Herstellung der Formmassen.

Die erfindungsgemäßen thermoplastischen Formmassen eignen sich aufgrund ihrer ausgezeichneten Flammfestigkeit und ihrer guten mechanischen Eigenschaften zur Herstellung von Formkörpern jeglicher Art, insbesondere solchen mit erhöhten Anforderungen andas Verarbeitungsverhalten.

Darunter fallen kompliziert aufgebaute Teile mit mehreren Angußstellen und dünnwandige Gehäuseteile mit Wandstärken <2 mm, vorzugsweise <1,5 mm.

Die Formmassen der vorliegenden Erfindung können zur Herstellung von Formkörpem jeder Art verwendet werden. Insbesondere können Formkörper durch Spritzguß hergestellt werden. Beispiele für herstellbare Formkörper sind: Gehäuseteile jeder Art, z.B. für Haushaltsgeräte wie Saftpressen, Kaffeemaschinen, Mixer, für Büromaschinen, wie Monitore, Drucker, Kopierer oder Abdeckplatten für den Bausektor und Teile für den Kfz-Sektor. Sie sind außerdem auf dem Gebiet der Elektrotechnik einsetzbar, weil sie sehr gute elektrische Eigenschaften haben.

Eine weitere Form der Verarbeitung ist die Herstellung von Formkörpern durch Tiefziehen aus vorher hergestellten Platten oder Folien.

Ein weiterer Gegenstand der vorliegenden Erfindung ist daher auch die Verwendung der erfindungsgemäßen Formmassen zur Herstellung von Formkörpern jeglicher Art, vorzugsweise der oben genannten, sowie die Formkörper aus den erfindungsgemäßen Formmassen.

Weiterhin können die erfindungsgemäßen Formmassen beispielsweise zur Herstellung von folgenden Formkörpern bzw. Formteilen verwendet werden:

Innenausbauteile für Schienenfahrzeuge (FR)
Radkappen
Gehäuse von Kleintransformatoren enthaltenden Elektrogeräten
Gehäuse für Geräte zur Informationsverbreitung und -Übermittlung
Gehäuse und Verkleidung für medizinische Zwecke
Massagegeräte und Gehäuse dafür
Spielfahrzeuge für Kinder
Flächige Wandelemente
Gehäuse für Sicherheitseinrichtungen
Heckspoiler
Wärmeisolierte Transportbehaltnisse
Vorrichtung zur Haltung oder Versorgung von Kleintieren
Formteile für Sanitar- und Badeausrüstungen
Abdeckgitter für Lüfteroffnungen
Formteile für Garten- und Gerätehäuser
Gehäuse für Gartengeräte

**Beispiele**

**Komponente A**

Lineares Polycarbonat auf Basis Bisphenol A mit einer relativen Lösungsviskosität von 1,26, gemessen in $CH_2Cl_2$ als Lösungsmittel bei 25°C und einer Konzentration von 0,5 g/100 ml.

**Komponente B**

B.1 Masse-ABS-Polymerisat der DOW Chemical Company Midland, Michigan USA (Handelsname Magnum 3504) Acrylnitril: Butadien·Styrol = 22,0:10,2·67,8

B.2 Vergleich
Pfropfpolymerisat von 40 Gew.-Teilen eines Copolymerisats aus Styrol und Acrylmtril im Verhältnis von 73:27 auf 60 Gew -Teile teilchenförmigen vernetzten Polybutadienkautschuk (mittlerer Teilchendurchmesser $d_{50}$ = 0.28 μm), hergestellt durch Emulsionspolymerisation.

**Komponente C**

Styrol/Acrylnitril-Copolymerisat mit einem Styrol/Acrylnitril-Gewichtsverhältnis von 72:28 und einer Grenzviskosität von 0,55 dl/g (Messung in Dimethylformamid bei 20°C).

**Komponente D**

Phenoxyphosphazen der Formel

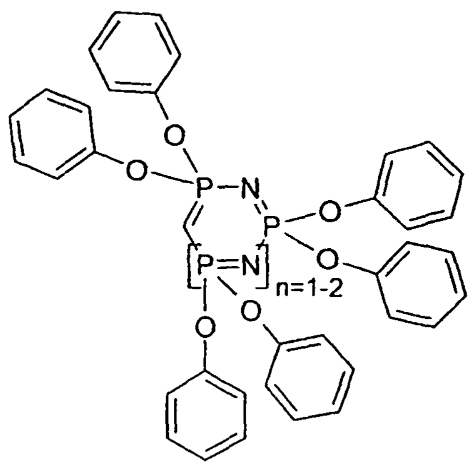

Handelsprodukt P-3800 der Firma Nippon Soda Co., Ltd., Japan.
Als Entformungsmittel wird Pentaerythrittetrastearat eingesetzt.

**Komponente E**

Tetrafluorethylenpolymerisat als koagulierte Mischung aus einer SAN-Pfropfpolymerisat-Emulsion (Pfropfpolymerisat von 40 Gew.-Teilen eines Copolymerisats aus Styrol und Acrylnitril im Verhältnis von 73:27 auf 60 Gew. -Teile teilchenförmigen vernetzten Polybutadienkautschuk, hergestellt durch Emulsionspolymerisation, mittlerer Teilchendurchmesser d50 = 0,28 μm) in Wasser und einer Tetrafluorethylenpolymerisat-Emulsion in Wasser. Das Gewichtsverhältnis Pfropfpolymerisat B zum Tetrafluorethylenpolymerisat E in der Mischung ist 90 Gew.-% zu 10 Gew.-%. Die Tetrafluorethylenpolyermisat-Emulsion besitzt einen Feststoffgehalt von 60 Gew -%, der mittlere Teilchendurchmesser liegt zwischen 0,05 und 0,5 μm. Die SAN-Pfropfpolymerisat-Emulsion besitzt einen Feststoffgehalt von 34

Gew.-% und einen mittleren Latexteilchendurchmesser von $d_{50}$ = 0,28 µm.

**Herstellung von E**

Die Emulsion des Tetrafluorethylenpolymerisats (Teflon 30 N der Fa. DuPont) wird mit der Emulsion des SAN-Pfropfpolymerisats vermischt und mit 1,8 Gew.-%, bezogen auf Polymerfeststoff, phenolischer Antioxidantien stabilisiert. Bei 85 bis 95°C wird die Mischung mit einer wäßrigen Lösung von $MgSO_4$ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet. Dieses Pulver kann dann mit den weiteren Komponenten in den beschriebenen Aggregaten compoundiert werden.

**Herstellung und Prüfung der erfindungsgemäßen Formmassen**

Das Mischen der Komponenten erfolgt auf einem 3-1-Innenkneter. Die Formkörper werden auf einer Spritzgießmaschine Typ Arburg 270 E bei 260°C hergestellt.

Die Bestimmung der Wärmeformbeständigkeit nach Vicat B erfolgt gemäß DIN 53 460 (ISO 306) an Stäben der Abmessung 80 x 10 x 4 mm.

Das Spannungsrißverhalten (ESC-Verhalten) wurde an Stäben der Abmessung 80 x 10 x 4 mm, Verarbeitungstemperatur 260°C, untersucht. Als Testmedium wurde eine Mischung aus 60 Vol.% Toluol und 40 Vol.% Isopropanol verwendet. Die Probekörper wurden mittels einer Kreisbogenschablone vorgedehnt (Vordehnung in Prozent) und bei Raumtemperatur im Testmedium gelagert. Das Spannungsrißverhalten wurde über die Rißbildung bzw. den Bruch in Abhängigkeit von der Vordehnung im Testmedium beurteilt.

Als Maß für die Werkzeugbelagsbildung wurde die thermogravimetrische Analyse (TGA) herangezogen. Dabei wurde der Masseverlust der Mischungen unter $N_2$ als Inertgas im Temperaturbereich von 0 bis 400°C mit einer Aufheizrate von 10 K/min bestimmt. Zur Beurteilung wurde der Masseverlust bei einer Temperatur von 280°C, die üblichen Verarbeitungstemperaturen entspricht, herangezogen. Je höher der Zahlenwert, desto größer ist die Tendenz zur Belagsbildung während des Verarbeitungsprozesses Niedrige Werte zeigen eine geringe Neigung zur Belagsbildung an

Tabelle:

| **Formmassen und ihre Eigenschaften** (Angaben in Gew.-Teile) | | | | | |
|---|---|---|---|---|---|
| | 1 | 2 | 3 | 4 | 5 (Vergleich) |
| Komponenten | | | | | |
| A | 66,7 | 66,7 | 60,7 | 75,0 | 66,7 |
| B1 | 16,7 | 14,2 | 16,7 | 10,4 | - |
| B2 | - | - | - | - | 7,3 |
| C | - | 2,0 | - | - | 9,4 |
| D | 12,0 | 12,0 | 18,0 | 10,0 | 12,0 |
| E | 4,2 | 4,2 | 4,2 | 4,2 | 4,2 |
| Entformungsmittel | 0,4 | 0,4 | 0,4 | 0,4 | 0,4 |
| Eigenschaften ak ISO 180/1A (kJ/m$^2$) | 55 | 54 | 53 | 58 | 54 |
| Vicat B120 (°C) | 108 | 108 | 99 | 105 | 107 |
| UL94V 1,6 mm | V-0 | V-0 | V-0 | V-0 | V-0 |
| ESC-Verhalten Bruch bei εx (%) | 2,4 | 2,4 | 2,0 | 2,4 | 2,2 |
| MVR (240/5), ISO 1133 (cm$^3$/10 min) | 13,6 | 15,3 | 26,6 | 10,3 | 8,4 |
| TGA Masseverlust bei 280°C (%) | 0,56 | 0,55 | 0,57 | 0,51 | 0,75 |

Die erfindungsgemäßen Formmassen zeichnen sich durch eine günstige Eigenschaftskombination aus Flammschutz und mechanischen Eigenschaften aus. Dazu kommt der überraschende Befund, daß die Masse-ABS enthaltenen Formmassen zusätzhche Vorteile im Bereich Verarbeitungsverhalten aufweisen. Sowohl das Fließverhalten (MVR) als auch der Masseverlust, der als Maß für die unter Verarbeitungsbedingungen auftretende Werkzeugbelagsbildung angesehen werden kann, sind deutlich günstiger (ca. 20 %) als bei Formmassen mit Emulsions-ABS.

**Patentansprüche**

**1.** Thermoplastische Formmassen enthaltend

A) 40 bis 99 Gew.-Teile aromatisches Polycarbonat und/oder Polyestercarbonat

B) 0,5 bis 60 Gew.-Teile mittels Masse-, Lösungs- oder Masse-Suspensions-Polymerisationsverfahren hergestelltes Pfropfpolymerisat von

B.1) einem oder mehreren Vinylmonomeren auf

B.2) einer oder mehrerer Pfropfgrundlagen mit einer Glasumwandlungstemperatur <10°C,
wobei das Pfropfpolymerisat B) basiert auf einem Polymerisat aus 65 bis 98, bevorzugt 75 bis 97 Gew. -Teilen eines Gemischs B.1 aus 50 bis 99 Gew.-Teilen Styrol, $\alpha$-Methylstyrol, halogen- oder alkylkernsubstituierte Styrole und/oder (Meth)acrylsäure-$C_1$-$C_8$-alkylester und 1 bis 50 Gew.-Teilen ungesättigte Nitrile, (Meth)Acrylsäure-$C_1$-$C_8$-alkylester, Derivate ungesättigter Carbonsäuren oder Mischungen dieser Verbindungen, polymerisiert in Gegenwart von 2 bis 13 Gew.-Teilen der Kautschukkomponente B.2,

C) 0 bis 45 Gew.-Teile mindestens eines thermoplastischen Polymers, ausgewählt aus der Gruppe der Vinyl (co)polymerisate und Polyalkylenterephthalate,

D) 0,1 bis 50 Gew.-Teile mindestens einer Komponente, ausgewählt aus der Gruppe der Phosphazene der Formeln

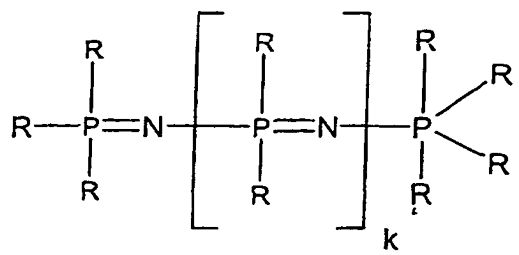

(Ia),

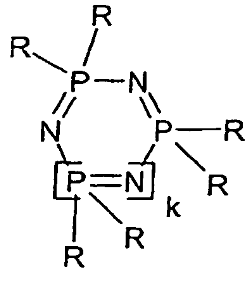

(Ib),

worin

R jeweils gleich oder verschieden ist und für Amino, jeweils gegebenenfalls halogeniertes, vorzugsweise mit Fluor halogeniertes $C_1$-bis $C_6$-Alkyl oder $C_1$-$C_8$-Alkoxy, jeweils gegebenenfalls durch Alkyl, vorzugsweise $C_1$-$C_4$-Alkyl, und/oder Halogen, vorzugsweise Chlor, Brom, substituiertes $C_5$- bis $C_6$-Cycloalkyl, $C_6$- bis $C_{20}$-Aryl, vorzugsweise Phenyl oder Naphthyl, $C_6$- bis $C_{20}$-Aryloxy, vorzugsweise Phenoxy, Naphthyloxy, oder $C_7$-$C_{12}$-Aralkyl, vorzugsweise Phenyl-$C_1$-$C_4$-alkyl, steht,

k für 0 oder eine Zahl von 1 bis 15, vorzugsweise für eine Zahl von 1 bis 10 steht,

E) 0 bis 5 Gew.-Teile fluoriertes Polyolefin.

**2.** Formmassen gemäß Anspruch 1, enthaltend
60 bis 98,5 Gew.-Teile A
1 bis 40 Gew.-Teile B
0 bis 30 Gew.-Teile C
2 bis 35 Gew.-Teile D und
0,1 bis 1 Gew.-Teile E

**3.** Formmassen gemäß Anspruch 1 und 2 enthaltend 2 bis 25 Gew.-Teile C.

**4.** Formmassen gemäß der Ansprüche 1 bis 3, enthaltend 5 bis 25 Gew.-Teile D.

**5.** Formmassen gemäß der vorhergehenden Anspruche, wobei Vinylmonomere B.1 Gemische aus

B.1.1 Styrol, α-Methylstyrol, halogen- oder alkylkernsubstituierte Styrole und/oder (Meth)Acrylsäure-$C_1$-$C_8$-alkylester und

B.1.2 ungesättigte Nitrile, (Meth)Acrylsäure-$C_1$-$C_8$-alkylester und/oder Derivate ungesättigter Carbonsäuren.

**6.** Formmassen gemäß der vorhergehenden Ansprüche, wobei die Pfropfgrundlage ausgewählt ist aus mindestens einem Kautschuk aus der Gruppe der Dienkautschuke, EP(D)M-Kautschuke, Acrylat-, Polyurethan-, Silikon-, Chloropren- und Ethylen/Vinylacetat-Kautschuk.

**7.** Formmassen gemäß der vorhergehenden Ansprüche, enthaltend wenigstens ein Additiv ausgewählt aus der Gruppe der Gleit- und Entformungsmittel, Nukleiermittel, Antistatika, Stabilisatoren, Farbstoffe und Pigmente.

**8.** Formmassen gemäß der vorhergehenden Ansprüche, enthaltend weitere Flammschutzmittel, welche verschieden sind von Komponente D.

**9.** Verfahren zur Herstellung von Formmassen gemäß Anspruch 1, wobei die Komponenten A bis E mit gegebenenfalls weiteren Zusätzen vermischt und schmelzcompoundiert werden.

**10.** Verwendung der Formmassen gemäß Anspruch 1 zur Herstellung von Formkörpern.

**11.** Formkörper, hergestellt aus Formmassen gemäß der Ansprüche 1 bis 8.

**Claims**

**1.** Thermoplastic moulding compositions containing

A) 40 to 99 parts by weight of aromatic polycarbonate and/or polyester carbonate

B) 0.5 to 60 parts by weight of graft polymer produced by bulk, solution or bulk/suspension polymerisation processes of

B.1) one or more vinyl monomers on

B.2) one or more grafting backbones having a glass transition temperature of <10°C
wherein the graft polymer B) is based on a polymer prepared from 65 to 98, preferably 75 to 97 parts by weight of a mixture B.1 prepared from 50 to 99 parts by weight of styrene, α-methylstyrene, halo- or alkyl-ring-substituted styrenes and/or (meth)acrylic acid $C_1$-$C_8$ alkyl esters and 1 to 50 parts by weight of unsaturated nitriles, (meth)acrylic acid $C_1$-$C_8$ alkyl esters, derivatives of unsaturated carboxylic acids or mixtures of these compounds, polymerised in the presence of 2 to 13 parts by weight of the rubber component B.2,

C) 0 to 45 parts by weight of at least one thermoplastic polymer selected from the group comprising vinyl (co) polymers and polyalkylene terephthalates,

D) 0.1 to 50 parts by weight of at least one component selected from the group comprising phosphazenes of the formulae

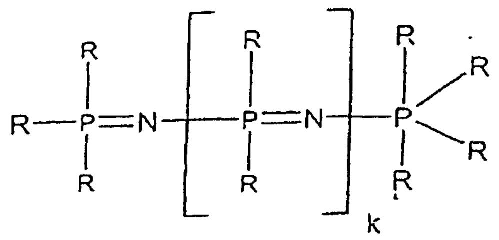

(Ia),

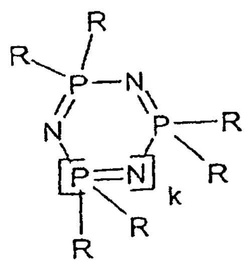

(Ib),

in which

R is in each case identical or different and denotes amino, $C_1$ to $C_6$ alkyl or $C_1$-$C_8$ alkoxy, in each case optionally halogenated, preferably halogenated with fluorine, $C_5$ to $C_6$ cycloalkyl, $C_6$ to $C_{20}$ aryl, preferably phenyl or naphthyl, $C_6$ to $C_{20}$ aryloxy, preferably phenoxy, naphthyloxy, or $C_7$ to $C_{12}$ aralkyl, preferably phenyl-$C_1$-$C_4$-alkyl, in each case optionally substituted by alkyl, preferably $C_1$-$C_4$ alkyl, and/or halogen, preferably chlorine, bromine,

k denotes 0 or a number from 1 to 15, preferably a number from 1 to 10,

E) 0 to 5 parts by weight of fluorinated polyolefin.

**2.** Moulding compositions according to claim 1 containing
60 to 98.5 parts by weight of A)
1 to 40 parts by weight of B)
0 to 30 parts by weight of C)
2 to 35 parts by weight of D) and
0.1 to 1 part by weight of E).

**3.** Moulding compositions according to claims 1 and 2 containing 2 to 25 parts by weight of C).

**4.** Moulding compositions according to claims 1 to 3 containing 5 to 25 parts by weight of D).

**5.** Moulding compositions according to the preceding claims, wherein vinyl monomers B.1 are mixtures prepared from

B.1.1 styrene, α-methylstyrene, halo- or alkyl-ring-substituted styrenes and/or (meth)acrylic acid $C_1$-$C_8$ alkyl esters and

B.1.2 unsaturated nitriles, (meth)acrylic acid $C_1$-$C_8$ alkyl esters and/or derivatives of unsaturated carboxylic acids.

**6.** Moulding compositions according to the preceding claims, wherein the grafting backbone is selected from among at least one rubber from the group comprising diene rubbers, EP(D)M rubbers, acrylate, polyurethane, silicone, chloroprene and ethylene/vinyl acetate rubber.

**7.** Moulding compositions according to the preceding claims containing at least one additive selected from the group comprising lubricants and mould release agents, nucleating agents, anti-static agents, stabilisers, dyes and pigments.

**8.** Moulding compositions according to the preceding claims containing further flame retardants which differ from component D).

**9.** Process for the production of moulding compositions according to claim 1, wherein components A) to E) and optionally further additives are mixed and melt-compounded.

**10.** Use of the moulding compositions according to claim 1 for the production of mouldings.

**11.** Mouldings produced from moulding compositions according to claims 1 to 8.

## Revendications

**1.** Compositions à mouler thermoplastiques contenant

A. 40 à 99 parties en masse d'un polycarbonate et/ou polyester-carbonate aromatique

B. 0,5 à 60 % en masse d'un polymère préparé par un procédé de polymérisation en masse, en solution ou en masse-suspension, greffé par

B.1 un ou plusieurs monomères vinyliques sur

B.2 une ou plusieurs bases de greffage ayant une température de transition vitreuse < 10°C ,
le polymère greffé B) étant à base d'un polymère constitué de 65 à 98, de préférence de 75 à 97 parties en masse d'un mélange B.1 de 50 à 99 parties en masse de styrène, d'α-méthylstyrène, de styrènes substitués sur le cycle par halogène ou alkyle et/ou de (méth)acrylates d'alkyle en $C_1$-$C_8$, et de 1 à 50 parties en masse de nitriles insaturés, de (méth)acrylates d'alkyle en $C_1$-$C_8$, de dérivés d'acides carboxyliques insaturés ou de mélanges de ces composés,
polymérisé en présence de 2 à 13 parties en masse du constituant caoutchouc B.2,

C. 0 à 45 parties en masse d'au moins un polymère thermoplastique, choisi dans le groupe des (co)polymères vinyliques et des poly(téréphtalates d'alkylène),

D 0,1 à 50 parties en masse d'au moins un constituant choisi dans le groupe des phosphazènes ayant les formules

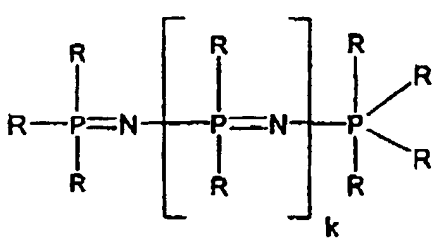

(Ia),

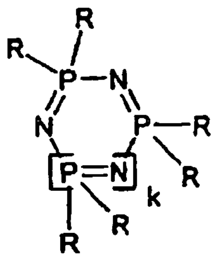

(Ib),

dans lesquelles

les R sont identiques ou différents et représentent chacun un groupe amino, un groupe alkyle en $C_1$-$C_6$ ou alcoxy en $C_1$-$C_8$ éventuellement halogéné, de préférence halogéné par du fluor, un groupe cycloalkyle en $C_5$-$C_6$, aryle en $C_6$-$C_{20}$, de préférence phényle ou naphtyle, aryloxy en $C_6$-$C_{20}$, de préférence phénoxy, naphtyloxy, ou aralkyle en $C_7$-$C_{12}$, de préférence phényl-(alkyle en $C_1$-$C_4$), éventuellement substitué par alkyle, de préférence alkyle en $C_1$-$C_4$, et/ou par halogène, de préférence par le chlore, le brome,

k est 0 ou un nombre de 1 à 15, de préférence un nombre de 1 à 10,

E. 0 à 5 parties en masse d'une polyoléfine fluorée.

**2.** Compositions à mouler selon la revendication 1, contenant
60 à 98,5 parties en masse de A,
1 à 40 parties en masse de B,
0 à 30 parties en masse de C,
2 à 35 parties en masse de D et
0,1 à 1 partie en masse de E.

**3.** Compositions à mouler selon la revendication 1 et 2, contenant 2 à 25 parties en masse de C.

**4.** Compositions à mouler selon les revendications1 à 3, contenant 5 à 25 parties en masse de D.

**5.** Compositions à mouler selon les revendications précédentes, dans lesquelles les monomères vinyliques B.1 sont des mélanges de

B.1.1 styrène, α-méthylstyrène, styrènes substitués sur le cycle par halogène ou alkyle et/ou (méth)acrylates d'alkyle en $C_1$-$C_8$ et de

B.1.2 nitriles insaturés, (méth)acrylates d'alkyle en $C_1$-$C_8$ et/ou dérivés d'acides carboxyliques insaturés.

**6.** Compositions à mouler selon les revendications précédentes, dans lesquelles la base de greffage est choisie parmi au moins un caoutchouc du groupe des caoutchoucs diènes, des caoutchoucs EP(D)M, des caoutchoucs acrylate, polyuréthane, silicone, chloroprène et éthylène/acétate de vinyle.

**7.** Compositions à mouler selon les revendications précédentes, contenant au moins un additif choisi dans le groupe des lubrifiants et des agents de démoulage, des agents de nucléation, des antistatiques, des stabilisants, des colorants et des pigments.

**8.** Compositions à mouler selon les revendications précédentes, contenant d'autres agents ignifuges, qui sont différents du constituant D.

**9.** Procédé de préparation de compositions à mouler selon la revendication 1, dans lequel on mélange les constituants A à E avec éventuellement d'autres additifs et on les malaxe à l'état fondu.

**10.** Utilisation des compositions à mouler selon la revendication 1 pour la préparation de corps moulés.

**11.** Corps moulés préparés à partir de compositions à mouler selon les revendications 1 à 8.